# EUROPÄISCHE PATENTSCHRIFT

(11) **EP 2 989 713 B1**
(45) Veröffentlichungstag und Bekanntmachung des Hinweises auf die Patenterteilung: **02.11.2022**
(21) Anmeldenummer: 14727370.0
(22) Anmeldetag: 22.04.2014
(51) Int. Cl.: H02K 49/04, H02K 16/02, H02K 5/173, H02K 99/00, H02K 47/20, H02K 7/18, H02K 7/02

(54) **ENERGIESPEICHER FÜR KINETISCHE ENERGIE UND VORRICHTUNG ZUR UNTERBRECHUNGSFREIEN ENERGIEVERSORGUNG**
KINETIC ENERGY ACCUMULATOR AND DEVICE FOR UNINTERRUPTED ELECTRIC POWER SUPPLY
ACCUMULATEUR D'ÉNERGIE CINÉTIQUE ET DISPOSITIF D'ALIMENTATION D'ÉNERGIE ÉLECTRIQUE SANS INTERRUPTIONS

(30) Priorität: 22.04.2013 AT 502762013
(43) Veröffentlichungstag der Anmeldung: 02.03.2016
(73) Patentinhaber: Hitzinger Electric Power GmbH, 4020 Linz (AT)
(72) Erfinder: ROLAND, Helmut, A-4030 Linz (AT); BILL, Christian, A-4600 Wels (AT)
(74) Vertreter: Jell, Friedrich
(86) Internationale Anmeldenummer: PCT/AT2014/050097
(87) Internationale Veröffentlichungsnummer: WO 2014/172737

(56) Entgegenhaltungen:
- WO-A1-93/24986
- WO-A1-99/39426
- WO-A1-03/023941
- DE-C1- 4 408 719
- DE-T2-602004 002 830
- GB-A- 2 078 016
- US-A- 4 309 620
- US-A1- 2004 119 373
- US-A1- 2007 210 666

## Beschreibung

### Technisches Gebiet

Die Erfindung betrifft einen Energiespeicher für kinetische Energie mit einem Gehäuse, mit einer Welle, die einen drehfest verbundenen Innenrotor aufweist, und mit einem, insbesondere trommelförmigen, Außenrotor, der den Innenrotor mindestens bereichsweise umgibt und der gegenüber der Welle drehbar gelagert ist, wobei der Innen- und/oder Außenrotor mindestens eine elektrische Wicklung aufweist.

### Stand der Technik

Aus dem Stand der Technik sind Speicher für kinetische Energie (DE602004002830T2) bekannt, die beispielsweise bei USV-Anlagen zur Drehzahlstabilisierung einer Generatorwelle verwendet werden. Dieser Energiespeicher verfügt über ein Gehäuse, eine Welle, einen an der Welle drehfest gelagerten Innenrotor einer elektrischen Maschine und einen trommelförmigen Außenrotor, der auf der Welle drehbar, beidseitig gelagert ist. Der Außenrotor wird auf einer gegenüber dem Innenrotor bzw. der Welle erhöhten Drehzahl gehalten. Bei einem Netzausfall bzw. bei Schwankungen der Drehzahl der Welle wird die im Außenrotor gespeicherte kinetische Energie zur Drehzahlstabilisierung verwendet. Um den Außenrotor auf Drehzahl zu bringen, ist am Innenrotor eine elektrische Wicklung vorgesehen, die einen sich schließenden magnetischen Fluss über beide Rotoren erzeugt. Zudem kann diese Wicklung bzw. eine zusätzliche Wicklung am Innenrotor zur Bremsung des Außenrotors verwendet werden, um diesem kinetische Energie zu entnehmen. Diese Ausgestaltung eines Energiespeichers kann zwar kompakte Bauverhältnisse durch eine konstruktive Verschachtelung von Innen- und Außenrotor gewährleisten, bedarf jedoch eines vergleichsweise hohen konstruktiven Aufwands in der Auslegung der mechanischen Lagerung der rotierenden Teile. Solche eine Auslegung muss nämlich bei Energiespeichern den Gesichtspunkten langer Betriebsdauern und allenfalls kurzer Standzeiten genügen. Letzteres wirkt sich auch beim Wartungsaufwand negativ aus - bekannte Konstruktionen können somit eine hohe Wartungsfreundlichkeit in Bezug auf die mechanische Lagerung der rotierenden Teile nicht erreichen.

Ein Stand der Technik nach dem Oberbegriff des Anspruchs 1 ist aus der US4309620A bekannt.

Die Erfindung hat sich daher die Aufgabe gestellt, ausgehend vom eingangs geschilderten Stand der Technik einen Energiespeicher dahingehend konstruktiv zu verändern, dass trotz kompakter Bauweise ein verminderter Konstruktions- und Wartungsaufwand besteht. Außerdem soll der Energiespeicher eine hohe Standfestigkeit sicherstellen können.

Die Erfindung löst die gestellte Aufgabe durch die Merkmale des Anspruchs 1.

Wird der Außenrotor am Gehäuse beidseitig mechanisch drehbar gelagert, kann auf eine Lagerung des Außenrotors auf drehenden Teilen des Energiespeichers verzichtet und damit der Außenrotor zur Welle hin mechanisch lagerfrei gehalten werden. Die Lagerung des Außenrotors kann sich damit zum Unterschied vom Stand der Technik mit feststehendem Lagerteil - beispielsweise in Form eines feststehenden Rollbahnelements bzw. feststehenden Innen- oder Außenrings eines Wälzlagers auszeichnen. So können erfindungsgemäß verringerte konstruktive Voraussetzungen bei den Lagerstellen des Außenrotors erreicht werden, dessen mechanische Lager nunmehr keine Relativdrehzahl zwischen ihren äußeren Teilen abtragen müssen. Zudem kann damit die Drehzahl des Käfigs der Wälzlager vermindert werden - wodurch beispielsweise in weiterer Folge das Lager in seiner Standardanwendung mit einem feststehenden Lagerteil betrieben werden kann. Insbesondere aber kann dieser Umstand dazu genutzt werden, einen unterbrechungsfreien Betrieb des Energiespeichers sicherzustellen. Das feststehende Lagerteil der Lagerung des Außenrotors lässt nämlich eine Wartung, insbesondere Nachschmierung, selbst während des Betriebs des Energiespeichers zu, sodass auch bei diesen mechanisch verhältnismäßig hoch belasteten Lagerstellen eine erhöhte Standfestigkeit erreicht werden kann. Hohe Betriebsdauern sind somit vom Energiespeicher sicher gewährleistbar. Zudem kann durch die Lagerung des Außenrotors am Gehäuse die leichte Zugänglichkeit zu den Lagerstellen für Messzwecke genützt werden, um damit beispielsweise den Wartungsaufwand zu verringern.

Der Energiespeicher kann konstruktiv vereinfacht werden, indem der Außenrotor in Hohlwellen endet, durch die die Welle mechanisch lagerfrei ragt. Zudem kann dies den Zusammenbau des Energiespeichers erleichtern, zumal diese Hohlwellen auch eine konstruktiv einfache Anordnung einer Fest-Los-Lagerung zulassen können.

Vorteilhaft können diese beidseitigen Hohlwellen als Lagerstelle dienen, indem die beiden Hohlwellen über je mindestens ein Rotorlager, insbesondere Wälzlager, am Gehäuse drehbar gelagert sind. Zudem kann damit eine besonders mechanisch belastbare drehbare Verbindung mit dem Gehäuse geschaffen werden.

Kompakte Bauverhältnisse können sich ergeben, wenn der Außenrotor an beiden Seitenwänden des Gehäuses drehbar gelagert ist. Außerdem können die Seitenwände des Gehäuses eine mechanisch belastbare Anbindung zur Aufnahme von Lagerkräften sicherstellen.

Ist zudem auch die Welle am Gehäuse mechanisch drehbar gelagert, kann für die unabhängig voneinander drehbaren Teile des Energiespeichers eine gemeinsame Lagerstelle zur Verfügung gestellt werden, die zur verbesserten gegenseitigen Stützung der Lagerung von Welle bzw. Innenrotor und Außenrotor beitragen kann. Die Standfestigkeit des Energiespeichers kann erfindungsgemäß somit erhöht werden.

Die beidseitige Lagerung des Außenrotors kann gegenüber einem Lagerspiel an der Welle unempfindlicher werden, indem die Rotorlager des Außenrotors zwischen den Wellenlagern der Welle angeordnet sind. Des Weiteren kann sich auf diese Weise der Zusammenbau des Energiespeichers erleichtern.

Ist mindestens ein zwischen Außenrotor und Gehäuse vorgesehenes Rotorlager, insbesondere Wälzlager, mit einer Leitung verbunden, die Schmierstoff aufweist, kann eine aktive Lagerschmierung erreicht werden, um damit die Lebensdauer der Lagerung des Außenrotors zu verlängern. Die Standfestigkeit des Energiespeichers kann damit erhöht werden. Zudem ist es nicht erforderlich, den Energiespeicher zu Wartungszwecken abzuschalten, wodurch wiederum hohe Betriebszeiten gewährleisten werden können.

Diese aktive Schmierung kann beispielsweise dadurch ermöglicht werden, indem die Leitung Teil einer Einrichtung zur Ölschmierung ist.

Alternativ kann die Leitung in einer Öffnung, insbesondere in einem Nippel zur Fettschmierung, außerhalb des Gehäuses enden, um je nach Bedarf diese aktive Schmierung manuell vornehmen zu können.

Vereinfachungen in der Konstruktion zum Drehantrieb des Außenrotors können sich dadurch ergeben, dass der Energiespeicher einen Segmentmotor und das Gehäuse des Energiespeichers eine Öffnung für den Segmentmotor aufweisen. Über diese Öffnung kann sich nämlich ein Zugang zum Außenrotor eröffnen, der dazu genutzt werden kann, den Außenrotor anzutreiben bzw. auf seine vorgegebene Drehzahl zu bringen. Hierzu muss lediglich der mindestens eine elektrische Wicklung aufweisende Stator in die Öffnung des Gehäuses eingesetzt und mit dem Außenrotor zur Ausbildung eines Segmentmotors zusammenwirken. Der Innenrotor kann daher von seiner Aufgabe der Beschleunigung des Außenrotors als kinetischer Speicher entlastet werden, was nicht nur zu einer kompakten Bauweise am Innenrotor führen, sondern auch den elektrischen Konstruktionsaufwand am Innenrotor verringern kann. Der Innenrotor muss somit ausschließlich die elektrische Wicklung zur magnetischen Kupplung mit dem Außenrotor tragen, um dem Außenrotor kinetische Energie zu entnehmen und auf die Welle zu übertragen. Es bedarf keiner weiteren elektrischen Maßnahmen am Innenrotor zu dessen Beschleunigung. Zudem kann durch Verlagerung dieser elektrischen Teile vom Innenrotor zum Gehäuse hin, diese verbessert gekühlt und damit deren Standfestigkeit erhöht werden. Des Weiteren kann ein Frequenzumrichter an solch einen hinsichtlich seiner elektrischen Seite von außen leicht zugänglichen Segmentmotor konstruktiv einfach angeschlossen werden. Eine Drehzahlregelung des Außenrotors, insbesondere unter Berücksichtigung lastabhängiger Verbrauchersituationen, kann dadurch vergleichsweise einfach realisiert werden. Zudem können diese vereinfachten elektrischen Konstruktionsverhältnisse die Standfestigkeit des Energiespeichers erhöhen.

Ist die Öffnung am Scheitel des Gehäusemantels angeordnet, kann der Segmentmotor auch zur mechanischen Entlastung der Lagerung des Außenrotors verwendet werden. Die Standfestigkeit des Energiespeichers kann sich durch diese Maßnahme erhöhen.

Vorteilhaft kann der Energiespeicher bei einer Vorrichtung zur unterbrechungsfreien Energieversorgung eingesetzt werden, die eine elektrische Maschine aufweist, deren Maschinenwelle mit der Welle des Energiespeichers verbunden ist. Damit kann beispielsweise die Drehzahl der Maschinenwelle stabilisiert werden, wenn die elektrische Maschine in Generatorbetrieb ist.

Weist die Vorrichtung zusätzlich einen Verbrennungsmotor und eine Kupplung auf, die zwischen elektrischer Maschine und dem Verbrennungsmotor vorgesehen ist, kann der Energiespeicher eingesetzt werden, um die Drehzahl der Maschinenwelle bis zum Zuschalten des Verbrennungsmotors zu stabilisieren. Eine besonders standfeste Vorrichtung bzw. eine unterbrechungsfreie Stromversorgung (USV) kann damit gewährleistet werden.

### Kurze Beschreibung der Zeichnung

In den Figuren ist beispielhaft der Erfindungsgegenstand anhand eines Ausführungsbeispiels näher dargestellt. Es zeigen
- Fig. 1: eine schematische Seitenansicht auf die Vorrichtung zur unterbrechungsfreien Energieversorgung,
- Fig. 2: eine abgerissene Seitenansicht auf den Energiespeicher der Fig. 1 und
- Fig. 3: eine Schnittansicht nach III-III der Fig. 2.

### Weg zur Ausführung der Erfindung

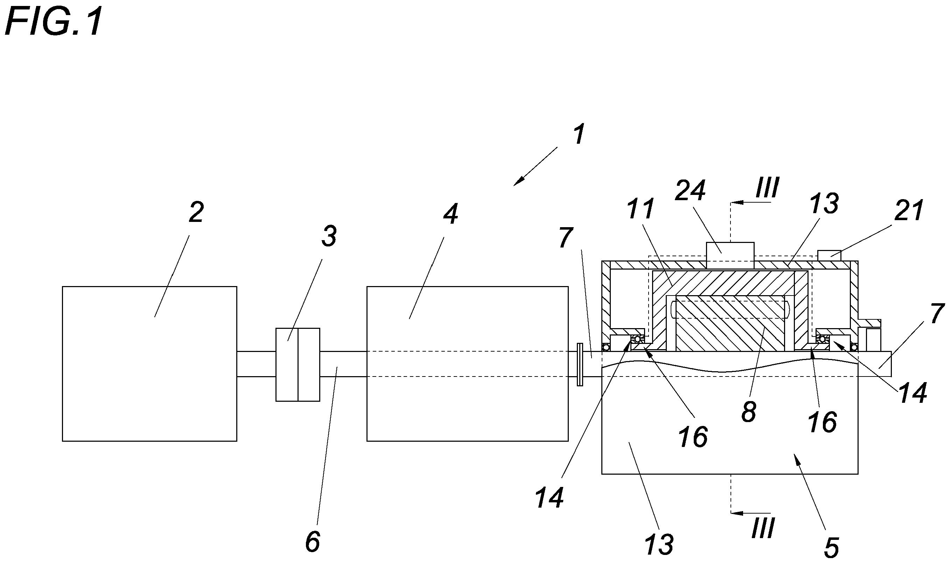

Die gemäß der nach Fig. 1 beispielsweise dargestellte Vorrichtung 1 zur unterbrechungsfreien Energieversorgung weist einen Verbrennungsmotor 2, eine elektromagnetische Kupplung 3, eine elektrische Maschine 4 und einen Energiespeicher 5 für kinetische Energie auf. Der Energiespeicher 5 dient dazu, die Drehzahl der Maschinenwelle 6 der elektrischen Maschine 4 zu stabilisieren und dadurch zu gewährleisten, dass die als Generator arbeitende elektrische Maschine 4 im Falle eines elektrischen Netzausfalls die geforderten elektrischen Kenndaten schwankungsfrei zur Verfügung stellen kann. Somit kann eine unterbrechungsfreie Energieversorgung sichergestellt werden. Bei einem Netzausfall wird der Verbrennungsmotor 2 auf eine Drehzahl gebracht und nach dem Erreichen dieser Drehzahl über die Kupplung 3 zugeschaltet, um einen zeitlich längeren elektrischen Netzausfall kompensieren zu können, als dies durch die vom Energiespeicher 5 gespeicherten kinetischen Energie möglich wäre. Die elektromagnetische Kupplung 3 ist an einem Ende der der Maschinenwelle 6 der elektrischen Maschine 4 angeflanscht.

Der Energiespeicher 5 ist mit seiner Welle 7 mit dem anderen Ende der Maschinenwelle 6 der elektrischen Maschine 4 verbunden. Eventuell kann noch eine nicht näher dargestellte elastische Kupplung zwischen dem Energiespeicher 5 und der elektrischen Maschine 4 zur Leistungsübertragung vorgesehen sein.

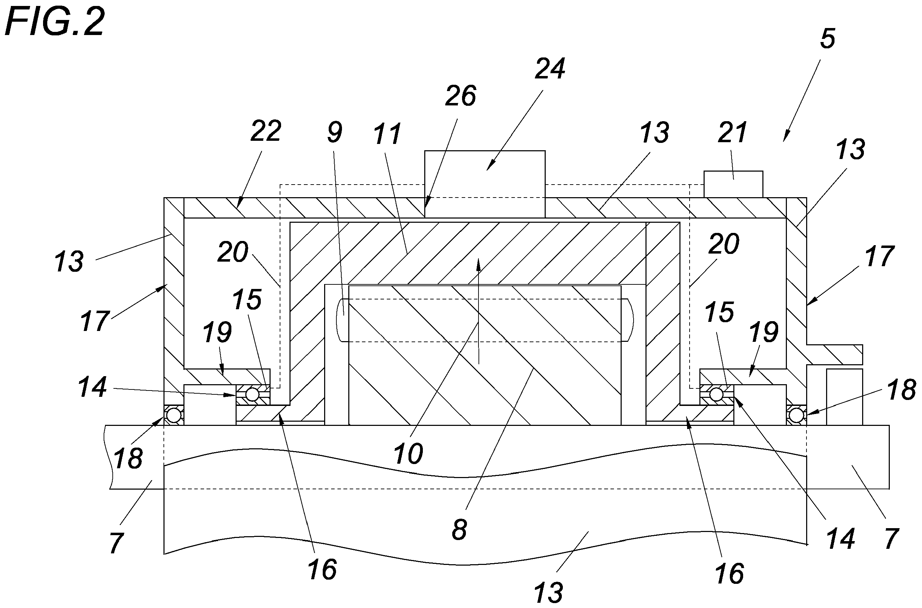

Wie der Fig. 2 zum Energiespeicher 5 im Detail zu entnehmen, weist dieser einen auf der Welle 7 drehfest angeordneten Innenrotor 8 auf, der eine elektrische Wicklung 9 trägt. Diese Wicklung 9 erzeugt im Innenrotor 8 einen magnetischen Fluss 10, der sich über den Außenrotor 11 zu einem magnetischen Kreis 12 schließt. Der topfförmig und als Vollkörper ausgebildete Außenrotor 11 ist um den Innenrotor 8 angeordnet und wirkt in der Art eines Kurzschlusskäfigs, wodurch ein von elektrischen Maschinen bekannte Kraftverbindung zwischen den beiden Rotoren 8, 11 durch Kopplung ihrer Magnetfelder entsteht. Da der Außenrotor 11 gegenüber der Welle 7 drehbar gelagert ist, kann dieser auch auf eine gegenüber der Welle 7 erhöhte Drehzahl gebracht werden, um damit kinetische Energie zu speichern. Damit stellt sich auch eine Relativdrehzahl zwischen Innenrotor 8 und Außenrotor 11 ein.

Trotz dieser Relativdrehzahl wird eine standfeste und kostengünstige Lagerung des Außenrotors erreicht, indem der Außenrotor 11 beidseitig am Gehäuse 13 drehbar mit Hilfe von Rotorlager 14, hier Wälzlager, mechanisch gelagert ist. Damit kann auf eine mechanische Lagerung zur Welle bzw. zum Innenrotor 8 hin verzichtet werden, was eine Lagerung des Außenrotors 11 mit feststehenden Lagerteilen 15 ermöglicht. So kann selbst im Betrieb des Energiespeichers 5 eine Schmierung der Wälzlager 14 vorgenommen werden, was eine hohe Betriebsdauer und Standfestigkeit sicherstellt.

Der Außenrotor 11 endet beidseitig in Hohlwellen 16. Durch diese Hohlwellen 16 ragt die Welle 7 mechanisch lagerfrei, was eine Kapselung des Innenrotors 8 zu dessen Schutz schafft.

Zudem bieten diese Hohlwellen 16 ausreichend Platz zum Angriff der Rotorlager 14 bzw. Wälzlager, um eine Fest-Los-Lagerung des Außenrotors 11 im Gehäuse 13 auszubilden. Wie insbesondere der Fig. 2 zu entnehmen, sind damit beide Hohlwellen 16 über je ein Wälzlager am Gehäuse 13 mechanisch drehbar gelagert.

Die Lagerung des Außenrotors 11 am Gehäuse 13 greift an dessen Seitenwänden 17 an, was unter Berücksichtigung der hier ebenso mechanisch angreifenden Wellenlager 18 bzw. Wälzlager, der Welle 7 eine besonders vorteilhafte gegenseitige Abstützung der drehbaren Teile des Energiespeichers 5 schafft.

Zwischen den beiden Wellenlagern 18 der Welle sind die Rotorlager 14 des Außenrotors 11 angeordnet. Hierfür springt das Gehäuse 13 mit je einem Steg 19 zum Außenrotor vor.

Mit einem Rotorlager 14 des Außenrotors 11 bzw. seinem feststehenden Lagerteil 15 ist eine Schmierstoff führende Leitung 20 verbunden. Damit wird das Rotorlager 14 bzw. Wälzlager aktiv geschmiert, und zwar mit Hilfe einer Einrichtung 21 zur ÖIschmierung oder Fettschmierung. Zur Fettschmierung kann die Einrichtung 21 auch als ein nicht näher dargestellter Nippel ausgebildet sein, an dem eine Fettpresse angesetzt werden kann.

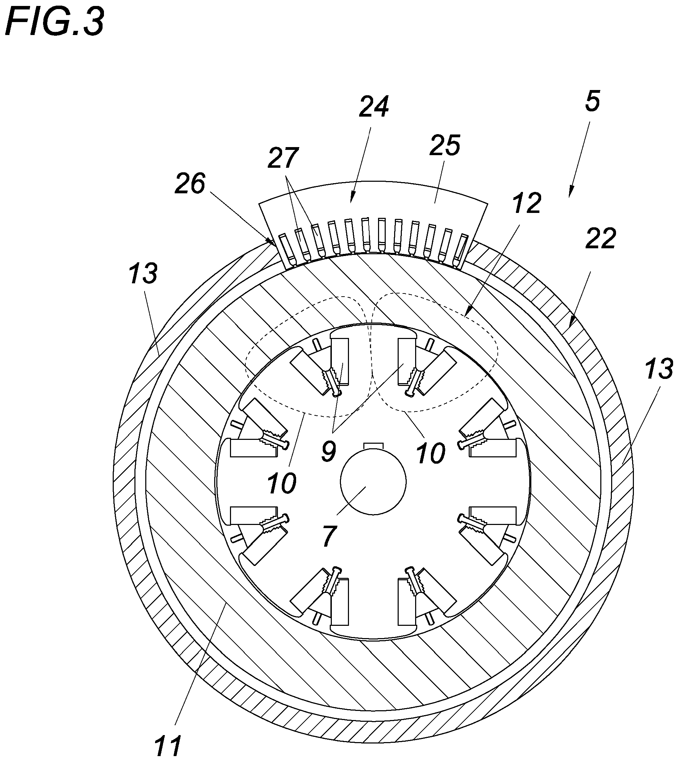

Zudem ist der Fig. 3 zu entnehmen, dass der Innenrotor 8 die Rotorform einer Schenkelpolmaschine aufweist, was den konstruktiven Aufwand am Energiespeicher 5 weiter reduziert. Im Allgemeinen wird erwähnt, dass für den Innenrotor 8 jegliche Rotorform vorstellbar ist.

Die Wicklung 9 am Innenrotor 8 wird als Bremswicklung verwendet.

Der Außenrotor wird mit Hilfe eines Segmentmotors 24 auf Drehzahl gebracht, der sich zwischen einem Stator 25 und dem Außenrotor 11 ausbildet. Hierfür weist das Gehäuse 13 des Energiespeichers 5 eine Öffnung 26 auf, in die der Stator 25 mit seiner elektrischen Wicklung 27 eingesetzt ist, was der Fig. 3 besser entnommen werden kann. Der Innenrotor 8 arbeitet sohin als elektrische Synchronmaschine - der Außenrotor 11 arbeitet sohin als Asynchronmaschine.

Diese Öffnung 26 ist zudem am Scheitel des Gehäusemantels 22 angeordnet, um damit die Rotorlager 14 des Außenrotors 11 zu entlasten.

## Patentansprüche

1. Energiespeicher für kinetische Energie mit einem Gehäuse (13), mit einer Welle (7), die am Gehäuse (13) beidseitig mechanisch drehbar gelagert ist und die einen drehfest verbundenen Innenrotor (8) aufweist, und mit einem, insbesondere trommelförmigen, Außenrotor (11) zur Speicherung der kinetischen Energie, welcher Außenrotor (11) den Innenrotor (8) mindestens bereichsweise umgibt und welcher Außenrotor (11) gegenüber der Welle (7) drehbar gelagert ist, wobei der Innen- (8) und/oder Außenrotor (11) mindestens eine elektrische Wicklung (9) aufweist, wobei der am Gehäuse (13) beidseitig mechanisch drehbar gelagerte Außenrotor (11) zur Welle (7) hin mechanisch lagerfrei gehalten ist, **dadurch gekennzeichnet, dass** der Außenrotor (11) beidseitig in Hohlwellen (16) endet, wobei die Welle (7) durch die zwei Hohlwellen (16) mechanisch lagerfrei ragt, und dass die beiden Hohlwellen (16) über je mindestens ein Rotorlager (14), nämlich Wälzlager, an je einer Seitenwand (17) des Gehäuses (13) drehbar gelagert sind, wobei sich die feststehenden Lagerteile (15), nämlich Außenringe, der Rotorlager (14) am Gehäuse (13) abstützen.

2. Energiespeicher nach Anspruch 1, **dadurch gekennzeichnet, dass** jede Seitenwand (17) mit einem Steg (19) zum Außenrotor (11) vorspringt, wobei sich die feststehenden Lagerteile (15) jeweils an einen Steg (19) der zwei Stege (19) abstützen.

3. Energiespeicher nach Anspruch 1 oder 2, **dadurch gekennzeichnet, dass** die Rotorlager (14) des Außenrotors (11) zwischen den Wellenlagern (18) der Welle (7) angeordnet sind.

4. Energiespeicher nach einem der Ansprüche 1 bis 3, **dadurch gekennzeichnet, dass** mindestens ein der zwischen Außenrotor (11) und Gehäuse (13) vorgesehenen Rotorlager (14) mit einer Leitung (20) verbunden ist, die Schmierstoff zur aktiven Lagerschmierung des Rotorlagers aufweist.

5. Energiespeicher nach Anspruch 4, **dadurch gekennzeichnet, dass** die Leitung (20) Teil einer Einrichtung zur Ölschmierung ist.

6. Energiespeicher nach Anspruch 4, **dadurch gekennzeichnet, dass** die Leitung (20) in einer Öffnung, insbesondere in einem Nippel zur Fettschmierung, außerhalb des Gehäuses (13) endet.

7. Energiespeicher nach einem der Ansprüche 1 bis 6, **dadurch gekennzeichnet, dass** der Energiespeicher (5) einen Segmentmotor (24) und das Gehäuse (13) des Energiespeichers (5) eine Öffnung (26) für den Segmentmotor (24) aufweisen, wobei der mindestens eine elektrische Wicklung (9) aufweisende Stator (25) des Segmentmotors (24) in die Öffnung (26) des Gehäuses (13) eingesetzt und mit dem Außenrotor (11) zur Ausbildung eines Segmentmotors (24) zusammenwirkt.

8. Energiespeicher nach Anspruch 7, **dadurch gekennzeichnet, dass** die Öffnung (26) am Scheitel des Gehäusemantels (22) angeordnet ist.

9. Vorrichtung zur unterbrechungsfreien Energieversorgung mit einer elektrischen Maschine (4) und mit einem Energiespeicher (5) nach einem der Ansprüche 1 bis 8, wobei die Welle (7) des Energiespeichers (5) mit der Maschinenwelle (6) der elektrischen Maschine (4) verbunden ist.

10. Vorrichtung nach Anspruch 9, **dadurch gekennzeichnet, dass** die Vorrichtung (1) einen Verbrennungsmotor (2) und eine Kupplung (3) aufweist, die zwischen elektrischer Maschine (4) und dem Verbrennungsmotor (2) vorgesehen ist.

## Claims

1. Energy storage unit for kinetic energy, having a housing (13), having a shaft (7) that is on the housing (13) mechanically rotatably mounted on both sides and has an inner rotor (8) connected in torque-proof manner, and having an outer rotor (11) , more particularly a drum-shaped rotor, for storing the kinetic energy, which outer rotor (11) surrounds the inner rotor (8) at least in certain regions, and which outer rotor (11) is mounted so as to rotate relative to the shaft (7), wherein the inner (8) and/or outer rotor (11) has/have at least one electric coil (9), wherein the outer rotor (11), which is mechanically mounted on the housing (13), on both sides, so as to rotate, is held in mechanically bearing-free manner toward the shaft (7), **characterized in that** the outer rotor (11) ends in hollow shafts (16) on both sides, the shaft (7) protruding through the two hollow shafts (16) mechanically bearing-free, and **in that** the two hollow shafts (16) each have at least one rotor bearing (14), namely roller bearings, are rotatably mounted on each side wall (17) of the housing (13), the stationary bearing parts (15), namely outer rings, of the rotor bearing (14) being supported on the housing (13).

2. Energy storage device according to claim 1, **characterized in that** each side wall (17) protrudes with a web (19) towards the outer rotor (11), the stationary bearing parts (15) each being supported on a web (19) of the two webs (19).

3. Energy storage device according to claim 1 or 2, **characterized in that** the rotor bearings (14) of the outer rotor (11) are disposed between the shaft bearings (18) of the shaft (7) .

4. Energy storage device according to one of claims 1 to 3, **characterized in that** at least one of the rotor bearings (14) provided between outer rotor (11) and housing (13) is connected with a line (20) that has lubricant for active bearing lubrication of the rotor bearing.

5. Energy storage device according to claim 4, **characterized in that** the line (20) is part of a device for oil lubrication.

6. Energy storage device according to claim 4, **characterized in that** the line (20) ends in an opening, more particularly in a nipple for grease lubrication, outside of the housing (13).

7. Energy storage device according to one of claims 1 to 6, **characterized in that** the energy storage device (5) has a segment motor (24), and the housing (13) of the energy storage device (5) has an opening (26) for the segment motor (24), wherein the stator (25) of the segment motor (24), which stator has at least one electric coil (9), is set into the opening (26) of the housing (13) and interacts with the outer rotor (11) to form a segment motor (24).

8. Energy storage device according to claim 7, **characterized in that** the opening (26) is disposed at the peak of the housing mantle (22).

9. Apparatus for an uninterruptible power supply, having an electric machine (4) and having an energy storage device (5) according to one of claims 1 to 8, wherein the shaft (7) of the energy storage device (5) is connected with the machine shaft (6) of the electric machine (4).

10. Apparatus according to claim 9, **characterized in that** the apparatus (1) has an internal combustion engine (2) and a coupling (3), which is provided between electric machine (4) and the internal combustion engine (2).

## Revendications

1. Accumulateur d'énergie pour de l'énergie cinétique avec un boîtier (13), avec un arbre (7) supporté mécaniquement des deux côtés du boîtier (13) avec possibilité de rotation et qui présente un rotor interne (8) relié de façon solidaire en rotation, et avec un rotor externe (11), en particulier en forme de tambour, pour accumuler l'énergie cinétique, lequel rotor externe (11) entoure au moins par zones le rotor interne (8) et lequel rotor externe (11) est supporté avec possibilité de rotation par rapport à l'arbre (7), dans lequel le rotor interne (8) et/ou le rotor externe (11) présentent au moins un enroulement électrique (9), dans lequel le rotor externe (11) supporté mécaniquement des deux côtés du boîtier (13) avec possibilité de rotation est retenu mécaniquement sans palier du côté de l'arbre (7), **caractérisé en ce que** le rotor externe (11) se termine des deux côtés par des arbres creux (16), l'arbre (7) dépassant mécaniquement sans palier à travers les deux arbres creux (16), et **en ce que** les deux arbres creux (16) sont supportés avec possibilité de rotation par au moins un palier de rotor (14) chacun, à savoir par un roulement à billes, chacun sur une paroi latérale (17) du boîtier (13), les parties de palier fixes (15), à savoir les bagues extérieures, des paliers de rotor (14) s'appuyant sur le boîtier (13).

2. Accumulateur d'énergie selon la revendication 1, **caractérisé en ce que** chaque paroi latérale (17) dépasse par une barrette (19) vers le rotor externe (11), les parties de palier fixes (15) s'appuyant chacune sur une barrette (19) parmi les deux barrettes (19).

3. Accumulateur d'énergie selon la revendication 1 ou 2, **caractérisé en ce que** les paliers de rotor (14) du rotor externe (11) sont disposés entre les paliers d'arbre (18) de l'arbre (7).

4. Accumulateur d'énergie selon l'une des revendications 1 à 3, **caractérisé en ce qu'**au moins un des paliers de rotor (14) prévus entre le rotor externe (11) et le boîtier (13) est relié à une conduite (20) qui contient un lubrifiant pour la lubrification active du palier de rotor.

5. Accumulateur d'énergie selon la revendication 4, **caractérisé en ce que** la conduite (20) fait partie d'une installation de lubrification par huile.

6. Accumulateur d'énergie selon la revendication 4, **caractérisé en ce que** la conduite (20) débouche dans une ouverture, en particulier dans un raccord de graissage, à l'extérieur du boîtier (13).

7. Accumulateur d'énergie selon l'une des revendications 1 à 6, **caractérisé en ce que** l'accumulateur d'énergie (5) présente un moteur segmenté (24) et le boîtier (13) de l'accumulateur d'énergie (5) présente une ouverture (26) pour le moteur segmenté (24), le stator (25) du moteur segmenté (24), qui présente au moins un enroulement électrique (9), pouvant être inséré dans l'ouverture (26) du boîtier (13) et coopérant avec le rotor externe (11) pour former un moteur segmenté (24).

8. Accumulateur d'énergie selon la revendication 7, **caractérisé en ce que** l'ouverture (26) est disposée au sommet de l'enveloppe du boîtier (22).

9. Dispositif pour une alimentation en énergie sans interruption avec une machine électrique (4) et avec un accumulateur d'énergie (5) selon l'une des revendications 1 à 8, dans lequel l'arbre (7) de l'accumulateur d'énergie (5) est relié à l'arbre de machine (6) de la machine électrique (4).

10. Dispositif selon la revendication 9, **caractérisé en ce que** le dispositif (1) comporte un moteur à combustion interne (2) et un embrayage (3) qui est prévu entre la machine électrique (4) et le moteur à combustion interne (2).
